# EUROPÄISCHE PATENTANMELDUNG

(11) **EP 3 379 026 A1**
(43) Veröffentlichungstag der Anmeldung: **26.09.2018**
(21) Anmeldenummer: 17161967.9
(22) Anmeldetag: 21.03.2017
(51) Int. Cl.: F01C 1/12, F01C 11/00, F01C 20/02, F02B 55/14, F01C 17/02, F02B 41/00, F02B 41/02, F02M 26/43

(54) **VERBRENNUNGSMOTOR UND VERFAHREN ZUM BETREIBEN EINES VERBRENNUNGSMOTORS**

(71) Anmelder: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(57) **Zusammenfassung**

Ein Verbrennungsmotor umfasst mehrere in Reihe angeordnete Motoreinheiten. Eine erste und eine zweite Motoreinheit umfassen jeweils: eine Zündkammer mit einem Einlass für zu verbrennenden Kraftstoff und mit einer Zündvorrichtung zum Entzünden von Kraftstoff; ein Kolbengehäuse, welches einen Innenraum bildet, in dem mindestens zwei Drehkolben angeordnet sind; eine schließbare Verbindung zwischen dem Innenraum und der Zündkammer zum Einleiten von Abgas, welches durch Verbrennung von Kraftstoff in der Zündkammer entsteht, wobei die mindestens zwei Drehkolben vom Abgas angetrieben werden; wobei jeder Innenraum einen Auslass für Abgas aufweist. Die Zündkammer der zweiten Motoreinheit weist außerdem einen Abgaseinlass auf, der mit dem Auslass der ersten Motoreinheit verbunden ist, so dass die Drehkolben der zweiten Motoreinheit auch von Abgas der ersten Motoreinheit angetrieben werden. Zudem wird ein Verfahren zum Betreiben eines solchen Verbrennungsmotors beschrieben.

## Beschreibung

Die vorliegende Erfindung bezieht sich in einem ersten Aspekt auf einen Verbrennungsmotor.

In einem zweiten Gesichtspunkt betrifft die Erfindung ein Verfahren zum Betreiben eines Verbrennungsmotors.

In Verbrennungsmotoren wird ein Kraftstoff verbrannt, um Rotationsenergie zu erzeugen. Je nach Anwendung kann die Rotationsenergie weiter in andere Energieformen umgewandelt werden. Bei solchen Verbrennungsmotoren kann es sich insbesondere um Verbrennungsmotoren für Fahrzeuge handeln, beispielsweise Otto-oder Dieselmotoren. Als Kraftstoff kann aber auch Wasserstoffgas oder ein prinzipiell beliebiges anderes brennbares Fluid eingesetzt werden. Verbrennungsmotoren der hier beschriebenen Art umfassen auch stationäre Ausführungen, bei denen der Verbrennungsmotor beispielsweise zusammen mit einem Generator elektrischen Strom erzeugt oder Bestandteil eines Kraftwerks ist.

Verbrennungsmotoren, die Gegenstand dieser Offenbarung sind, umfassen Drehkolbenmotoren. Diese bieten gewisse Vorteile gegenüber Hubkolbenmotoren, beispielsweise einen oftmals einfacheren Aufbau, wodurch eine robuste Bauform, ein geringeres Gewicht und Kostenersparnisse resultieren können. Ein Beispiel eines bekannten Drehkolbenmotors ist der Wankelmotor. Nachteilig an bekannten Drehkolbenmotoren ist die problematische Abdichtung der Drehkolben. Zudem ist allgemein ein möglichst hoher Wirkungsgrad des Verbrennungsmotors wünschenswert.

Als eine **Aufgabe** der Erfindung kann angesehen werden, einen möglichst effizienten und gleichzeitig robusten Verbrennungsmotor sowie ein Verfahren zum Betreiben eines möglichst effizienten und robusten Verbrennungsmotors anzugeben.

### Erfindungsgemäße Lösung

Diese Aufgabe wird durch den Verbrennungsmotor mit den Merkmalen des Anspruchs 1 und durch das Verfahren mit den Merkmalen des Anspruchs 15 gelöst.

Vorteilhafte Varianten des erfindungsgemäßen Verbrennungsmotors und des erfindungsgemäßen Verfahrens sind Gegenstand der abhängigen Ansprüche und werden außerdem in der folgenden Beschreibung erläutert.

Ein erfindungsgemäßer Verbrennungsmotor umfasst mehrere in Reihe angeordnete Motoreinheiten. Eine erste Motoreinheit der mehreren Motoreinheiten umfasst:
- eine erste Zündkammer, umfassend einen Kraftstoffeinlass für zu verbrennenden Kraftstoff und eine Zündvorrichtung zum Entzünden von Kraftstoff in der ersten Zündkammer,
- ein erstes Kolbengehäuse, welches einen Innenraum bildet, in dem mindestens zwei Drehkolben angeordnet sind,
- einen schließbaren Einlass zwischen dem Innenraum und der Zündkammer zum Einleiten von Abgas, welches durch Verbrennung von Kraftstoff in der ersten Zündkammer entsteht, wobei die mindestens zwei Drehkolben vom Abgas angetrieben werden,
- wobei der Innenraum des ersten Kolbengehäuses einen Auslass für Abgas aufweist.

Eine zweite Motoreinheit der mehreren Motoreinheiten umfasst:
- eine zweite Zündkammer, umfassend einen Kraftstoffeinlass für zu verbrennenden Kraftstoff, einen Abgaseinlass, der mit dem Auslass der ersten Motoreinheit verbunden ist, und eine zweite Zündvorrichtung zum Entzünden von Kraftstoff in der zweiten Zündkammer,
- ein zweites Kolbengehäuse, welches einen zweiten Innenraum bildet, in dem mindestens zwei weitere Drehkolben angeordnet sind,
- einen zweiten schließbaren Einlass zwischen dem zweiten Innenraum und der zweiten Zündkammer zum Einleiten von Abgas, welches durch Verbrennung von Kraftstoff in der zweiten Zündkammer entsteht, wobei die mindestens zwei weiteren Drehkolben vom Abgas angetrieben werden,
- wobei der zweite Innenraum einen zweiten Auslass für Abgas aufweist.

Bei einem erfindungsgemäßen Verfahren zum Betreiben eines Verbrennungsmotors umfasst der Verbrennungsmotor mehrere in Reihe angeordnete Motoreinheiten, wobei jede Motoreinheit ein Kolbengehäuse umfasst, welches einen Innenraum bildet, in dem jeweils mindestens zwei Drehkolben angeordnet sind, wobei das Verfahren umfasst:
- Einlassen von zu verbrennendem Kraftstoff in eine erste Zündkammer einer ersten Motoreinheit der mehreren Motoreinheiten;
- Entzünden des Kraftstoffs in der ersten Zündkammer mittels einer Zündvorrichtung;
- Einleiten von Abgas, welches durch Verbrennung von Kraftstoff in der ersten Zündkammer entsteht, in den Innenraum der ersten Motoreinheit durch Öffnen einer schließbaren Verbindung zwischen der Zündkammer und dem Innenraum;
- Antreiben der mindestens zwei Drehkolben der ersten Motoreinheit durch das Abgas, welches durch den Innenraum strömt,
- Auslassen des Abgases aus dem Innenraum der ersten Motoreinheit zumindest teilweise in eine zweite Zündkammer einer zweiten Motoreinheit der mehreren Motoreinheiten;
- Einlassen von zu verbrennendem Kraftstoff in die zweite Zündkammer;
- Entzünden des Gemisches umfassend Kraftstoff und Abgas in der zweiten Zündkammer mittels einer zweiten Zündvorrichtung;
- Einleiten von Abgas, welches durch Verbrennung von Kraftstoff in der zweiten Zündkammer entsteht, in den zweiten Innenraum der zweiten Motoreinheit durch Öffnen einer zweiten schließbaren Verbindung zwischen der zweiten Zündkammer und dem zweiten Innenraum;
- Antreiben von mindestens zwei Drehkolben der zweiten Motoreinheit durch das Abgas, welches durch den zweiten Innenraum strömt; und
- Auslassen des Abgases aus dem zweiten Innenraum.

Indem mehrere Motoreinheiten hintereinander genutzt werden, kann ein höherer Wirkungsgrad erreicht werden. Nach Durchströmen der ersten Motoreinheit hat Abgas noch eine verhältnismäßig hohe Energie, die durch den Abgasdruck und die Abgastemperatur bestimmt ist. Diese Energie wird zumindest teilweise genutzt, indem das Abgas von der ersten zur zweiten Motoreinheit geleitet wird, was hier als Anordnung in Reihe bezeichnet wird. In der zweiten Motoreinheit kann der noch vorhandene Abgasdruck zum Antreiben der Drehkolben der zweiten Motoreinheit genutzt werden, zusammen mit weiterem durch Verbrennung von Kraftstoff in der zweiten Zündkammer erzeugtem Abgas.

In analoger Weise können auf die zweite Motoreinheit weitere Motoreinheiten folgen, zwischen denen Abgas jeweils weitergegeben wird. Die Weitergabe von Abgas von einer Motoreinheit zur nächsten kann die Weitergabe des gesamtes Abgases oder bloß eines Teils des Abgases bezeichnen.

### Ausführungsvarianten betreffend mehrere Motoreinheiten

Es kann eine Antriebswelle vorhanden sein, mit welcher die Drehkolben der mehreren Motoreinheiten gekoppelt sind. Insbesondere kann jeweils ein erster Drehkolben von jeder Motoreinheit mit der Antriebswelle gekoppelt sein, während ein zweiter Drehkolben der jeweiligen Motoreinheit beim Antreiben des zugehörigen ersten Drehkolbens mitwirkt. Eine Kopplung muss nicht eine starre Verbindung bedeuten, sondern kann bezeichnen, dass ein Kraftübertrag von einem rotierenden Drehkolben auf die Antriebswelle erfolgt, um diese anzutreiben. Durch die Kopplung mehrerer Motoreinheiten können verhältnismäßig einfach und leicht aufgebaute Motoreinheiten verwendet werden und dennoch kann an der Antriebswelle ein hohes Drehmoment erzeugt werden.

Die Drehkolben der ersten Motoreinheit können bezüglich ihrer Drehachse oder bezüglich der Antriebswelle rotativ versetzt zu den Drehkolben der zweiten Motoreinheit sein. Auch die Drehkolben fakultativ vorhandener weiterer Motoreinheiten können rotativ versetzt zu den Drehkolben der übrigen oder zumindest der benachbarten Motoreinheiten sein. Ein rotativer Versatz wird dabei durch einen Rotationswinkel definiert, welcher einen Drehwinkelunterschied zwischen den Drehkolben verschiedener Motoreinheiten angibt. Ein Drehwinkelunterschied äußert sich durch eine andere Position der Dichtleisten der betrachteten Drehkolben. Für diesen rotativen Versatz kann insbesondere stets derjenige Drehkolben, der dem Einlass in den entsprechenden Innenraum zugewandt ist, berücksichtigt werden. Der Rotationswinkel kann insbesondere 360° geteilt durch die Anzahl an Motoreinheiten entsprechen. Durch eine solche gleichmäßige Aufteilung kann ein unruhiges Laufen des gesamten Verbrennungsmotors verringert werden.

Eine letzte der Motoreinheiten kann einen Abgasauslass aufweisen, über den zumindest ein Teil des Abgases zurückgeführt wird zu einem Abgaseinlass in der ersten Zündkammer der ersten Motoreinheit. Insbesondere kann auch ein symmetrischer Aufbau gleichberechtigter Motoreinheiten vorgesehen sein, wobei jede Motoreinheit Abgas zumindest Teilweise zur nächsten Motoreinheit weitergibt. Es kann vorgesehen sein, dass jede Motoreinheit einen Anteil des durchströmenden Abgases nicht etwa zu einer der Motoreinheiten, sondern zu einem Abgasnachbehandlungssystem oder einer Auspuffanlage weitergibt. Dieser Abgasanteil kann im laufenden Betrieb proportional zu einer gesamten Abgasmenge in den Motoreinheiten festgelegt sein oder kann durch Überdruckventile festgelegt sein.

Eine elektronische Steuereinrichtung kann vorhanden und dazu eingerichtet sein, abhängig von einer momentan geforderten Leistung eine Kraftstoffeinleitung in die jeweiligen Zündkammern und eine Aktivierung der zugehörigen Zündvorrichtungen variabel vorzunehmen, insbesondere entweder in alle oder nur in einen variabel einstellbaren Teil der Motoreinheiten Kraftstoff einzuleiten und zu zünden, wobei die übrigen Motoreinheiten allein von Abgas der vorhergehenden Motoreinheiten angetrieben werden. Hierdurch sind eine momentan erzeugte Leistung und ein momentan erzeugtes Drehmoment variabel einstellbar. In anderen Worten ausgedrückt kann eine Frequenz, mit der Kraftstoff eingeleitet und entzündet wird, für die verschiedenen Motoreinheiten unterschiedlich sein, wobei diese Frequenzen der verschiedenen Motoreinheiten zeitlich variabel verändert werden können, je nach geforderter Leistung oder Drehmoment.

Die oder eine elektronische Steuereinrichtung kann auch dazu eingerichtet sein, Zündzeitpunkte der Zündvorrichtungen unterschiedlicher Motoreinheiten so festzulegen, dass diese nacheinander, das heißt zeitlich versetzt und nicht gleichzeitig erfolgen. Insbesondere kann eine Verzögerung V zwischen den Zündzeitpunkten unterschiedlicher Zündvorrichtungen festgelegt werden als V=D/n, wobei D die Dauer zwischen zwei aufeinanderfolgenden Zündzeitpunkten derselben Zündvorrichtung ist und n die Anzahl an Motoreinheiten ist. Die Größe n kann auch die Anzahl momentan zur Zündung genutzter Motoreinheiten sein, so dass sowohl bei einem Teillastbetrieb (bei welchem einige der Motoreinheiten nur durch Abgas der vorherigen Motoreinheiten angetrieben werden und nicht selbst Kraftstoff verbrennen) als auch bei einem Vollastbetrieb (bei dem sämtliche Motoreinheiten Kraftstoff verbrennen) eine möglichst gleichmäßige Verteilung der Zündzeitpunkte vorliegt. Von einer exakt gleichmäßigen Verteilung der Zündzeitpunkte kann eine abweichende Korrektur erfolgen, durch welche eine bestimmte Stellung der Dichtleisten zum Zündungszeitpunkt erreicht wird.

Sind mindestens drei Motoreinheiten vorhanden, so kann eine letzte der mehreren Motoreinheiten, insbesondere als einzige der mehreren Motoreinheiten, keine Zündvorrichtung und keinen Kraftstoffeinlass für zu verbrennenden Kraftstoff aufweisen. Drehkolben dieser letzten Motoreinheit werden somit allein durch Abgas von einer oder mehreren vorhergehenden Motoreinheiten angetrieben. Hierdurch kann erreicht werden, dass Abgas stets mindestens zwei Innenräume verschiedener Motoreinheiten durchströmt, unabhängig davon, in welcher Zündkammer Kraftstoff verbrannt wurde.

Alternativ kann auch nach einigen oder allen Motoreinheiten eine Aufteilung des Abgasstroms erfolgen, so dass ein Teil des Abgases zur nächsten Motoreinheit geleitet wird und ein Teil nicht mehr zu einer der Motoreinheiten geleitet wird, sondern beispielsweise zu einem Abgasnachbehandlungssystem.

Prinzipiell können die Motoreinheiten beliebig positioniert werden. Es kann aber bevorzugt sein, dass die mehreren Motoreinheiten in Richtung der Rotationsachsen der Drehkolben übereinander angeordnet sind. Dies vereinfacht den mechanischen Aufwand, um die Motoreinheiten mit ein und derselben Antriebswelle zu koppeln. Zudem wird hierdurch ein kompakter Aufbau möglich, was vorteilhaft ist, wenn die mehreren Motoreinheiten von einem gemeinsamen Wärmeisolationsgehäuse umgeben sind. Ein Wärmeisolationsgehäuse bietet den Vorteil, dass das Abgas wenig Wärmeenergie verliert und somit auch nur ein geringer Anteil des Abgasdrucks verloren geht. Durch eine Anordnung übereinander können sich auch Vibrationen der einzelnen Motoreinheiten zumindest teilweise kompensieren. Es kann aber auch eine Anordnung der Motoreinheiten nebeneinander vorteilhaft sein, was insbesondere davon abhängen kann, ob eine Weiterleitung von Abgas über eine Stirn- oder Mantelfläche von einem Innenraum einer Motoreinheit erfolgen soll.

Eine elektronische Steuereinrichtung kann vorhanden und dazu eingerichtet sein, eine Drehsinnumkehr der Drehkolben der Motoreinheiten auszuführen. Dies kann beispielsweise wünschenswert sein, um bei Verwendung in einem Kraftfahrzeug einen Rückwärtsgang bereitzustellen. Hierbei wird Abgas in umgekehrter Richtung durch den jeweiligen Innenraum der Motoreinheiten geleitet, das heißt von einem Auslass des Innenraums zum Einlass desselben Innenraums. Dies kann insbesondere erreicht werden, indem die Öffnungs- und Schließzeitpunkte für den schließbaren Einlass und den schließbaren Auslass einer Zündkammer geändert werden. Insbesondere wird die Reihenfolge vertauscht, in welcher der schließbare Einlass und der schließbare Auslass, die an dieselbe Zündkammer angrenzen, geöffnet und geschlossen werden. Bei diesem Betrieb mit umgekehrtem Drehsinn wird Abgas, das durch Verbrennung von Kraftstoff in der zweiten Zündkammer der zweiten Motoreinheit entsteht, nicht etwa zum Innenraum der zweiten Motoreinheit geleitet, sondern zum Innenraum der ersten Motoreinheit. Abgas verlässt in diesem Betriebsmodus somit die zweite Zündkammer nicht durch den schließbaren Einlass der zweiten Motoreinheit, sondern durch den schließbaren Auslass der ersten Motoreinheit. Die erste Zündkammer wird bei diesem Betrieb mit umgekehrtem Drehsinn entweder nicht zur Entzündung von Kraftstoff genutzt oder das Abgas und der ersten Zündkammer wird zu einer anderen (insbesondere letzten) der Motoreinheiten geleitet.

Um den Betriebsmodus mit umgekehrtem Drehsinn bereitzustellen, kann es vorteilhaft sein, wenn die schließbaren Einlässe und schließbaren Auslässe gleichartig oder identisch gebildet sind. Werden die Dichtleisten der Drehkolben zum Öffnen und Schließen der schließbaren Einlässe und schließbaren Auslässe verwendet (wie an anderer Stelle in dieser Offenbarung näher beschrieben), so wird für eine Drehsinnumkehr ein Rotationswinkelversatz zwischen Drehkolben aufeinanderfolgender Motoreinheiten geändert, insbesondere umgekehrt.

Am Auslass des Innenraums des ersten Kolbengehäuses kann ein Auslass-Schließkörper vorhanden ist, welcher eine schließbare Verbindung zur Zündkammer der zweiten Motoreinheit bereitstellt. Eine elektronische Steuereinrichtung kann vorhanden und dazu eingerichtet sein, die zweite Zündvorrichtung zu aktivieren, während der Auslass-Schließkörper der ersten Motoreinheit geschlossen ist und insbesondere während der Einlass-Schließkörper der zweiten Motoreinheit geöffnet ist. Wenn alternativ der Einlass-Schließkörper der zweiten Motoreinheit bei der Zündung durch die zweite Zündvorrichtung noch geschlossen ist, so öffnet jedenfalls der Einlass-Schließkörper der zweiten Motoreinheit früher als der Auslass-Schließkörper der ersten Motoreinheit.

Die Drehkolben sind so dimensioniert und im Innenraum angeordnet, dass sie diesen bei Stillstand dichtend teilen. Dadurch kann Abgas den Innenraum nur durchströmen (also von der Zündkammer zu einer Austrittsöffnung gelangen, die sich im Innenraum auf einer Seite der Drehkolben befindet, welche der Zündkammer gegenüber liegt), wenn dabei die Drehkolben rotiert werden. Für diese Dichtung ist einerseits ein Kontakt der beiden Drehkolben zueinander nötig. Durch diesen Kontakt kann wenig oder kein Abgas zwischen den beiden Drehkolben hindurch gelangen. Andererseits wird für die Dichtung auch ein Kontakt der beiden Drehkolben zu der Gehäuseinnenwand benötigt. Dieser Kontakt besteht zumindest an einer nach außen gewandten Seite des jeweiligen Drehkolbens, welche dem Kontaktbereich zwischen den Drehkolben abgewandt ist. Beispielsweise kann jeder Drehkolben mittels seiner Dichtleisten einen dichtenden Kontakt zur benachbarten Gehäuseinnenwand über einen Winkelbereich von mindestens 150°, bevorzugt mindestens 180° und besonders bevorzugt mehr als 180° bereitstellen.

Hierin angegebene Zahlenwerte sollen so verstanden werden, dass außer dem exakt angegebenen Zahlenwert auch Abweichungen von 10% erfasst sind.

Die als zusätzliche gegenständlichen Merkmale beschriebenen Eigenschaften der Erfindung sind auch als Varianten des erfindungsgemäßen Verfahrens aufzufassen, und umgekehrt.

### Dichtleisten

Für einen möglichst hohen Wirkungsgrad des Verbrennungsmotors ist die Abdichtung der Drehkolben der Motoreinheiten wichtig. Jeder Drehkolben hat vorzugsweise an seinem Außenumfang mindestens zwei Dichtleisten und mindestens zwei Vertiefungen, wobei die Formen der Vertiefungen und der Dichtleisten gewählt sind zum Eingreifen der Dichtleisten von jeweils einem der Drehkolben in die Vertiefungen des jeweils anderen Drehkolbens. Zudem sind die Dichtleisten in Radialrichtung des jeweiligen Drehkolbens zum dichtenden Kontaktieren einer Gehäuseinnenwand bemessen.

### Weitere Ausführungsvarianten

Unter Abgas soll hier allgemein das Gemisch verstanden werden, das durch die Verbrennung von Kraftstoff oder eines Kraftstoff-Luftgemisches in der Zündkammer entsteht. Durch die Verbrennung des Kraftstoffs erhöht sich der Druck in der Zündkammer und wegen der Verbindung zum Innenraum auch an den Drehkolben. Das bei der Verbrennung erzeugte Abgas drückt daher gegen die Drehkolben und strömt an diesen entlang, wobei die Drehkolben in Rotation versetzt werden. Diese Rotationsbewegung kann weiter genutzt werden. Beim Beispiel eines Fahrzeugs wird die Rotationsenergie jedenfalls teilweise auf Antriebsräder des Fahrzeugs übertragen.

Die Dichtleisten sind in Radialrichtung zum dichtenden Kontaktieren einer Gehäuseinnenwand bemessen. Die Radialrichtung bezieht sich dabei auf den Radius des zugehörigen Drehkolbens, womit die Radialrichtung quer oder senkrecht zur Rotationsrichtung des jeweiligen Drehkolbens steht. Das an den Drehkolben entlang strömende Abgas drückt gegen einige der Dichtleisten, wodurch diese Dichtleisten gegen die Gehäuseinnenwand gedrückt werden. In diesem Zusammenhang ist die Gehäuseinnenwand als Mantelfläche in Bezug auf die Drehachsen der Drehkolben des Innenraums zu verstehen, nicht als Stirnseiten des Innenraums. Insbesondere kann je nach Drehstellung mindestens eine (oder genau eine) der Dichtleisten von jedem Drehkolben dem einströmenden Abgas ausgesetzt sein und somit durch dieses gegen die Gehäuseinnenwand gedrückt werden.

Vorzugsweise umfassen die Dichtleisten ein verformbares oder elastisches Material, so dass sie durch den Abgasdruck verformt werden und dichtend gegen die Gehäuseinnenwand drückbar sind. Das Material der Dichtleisten ist leichter verformbar oder elastischer als ein die Dichtleisten umgebendes Material des Drehkolbens, insbesondere als das Material, aus dem die später näher beschriebenen Nuten zum Aufnehmen der Dichtleisten gebildet sind.

Der in der Zündkammer zu verbrennende Kraftstoff kann grundsätzlich eine beliebige entzündbare Substanz sein. Beispielsweise kann der Kraftstoff Benzin oder Diesel sein oder umfassen. Es kann bevorzugt sein, dass als Kraftstoff Ethanol oder ein ethanolhaltiger Kraftstoff oder alternativ Wasserstoffgas oder ein Gemisch mit Wasserstoffgas verwendet wird. Bei einer Zündvorrichtung zum Entzünden des Kraftstoffs kann es sich zum Beispiel um Laser handeln. Unter einer Zündvorrichtung können auch Zündkerzen oder andere Vorrichtungen zur Funken- oder Flammenerzeugung verstanden werden.

Damit ein durch die Verbrennung des Kraftstoffs entstehender Druck effizient auf die Drehkolben wirken kann, kann es bevorzugt sein, dass die Zündkammer an den Innenraum angrenzt, in welchem die Drehkolben angeordnet sind. Beispielsweise kann die Zündkammer an das Kolbengehäuse des Innenraums angeflanscht sein. Alternativ können die Zündkammer und der Innenraum auch durch ein Rohr oder eine andere Verbindungsleitung verbunden sein.

Ein Druck von der Zündkammer kann verhältnismäßig gleichmäßig die Drehkolben antreiben. Dadurch unterscheidet sich der Verbrennungsmotor wesentlich von beispielsweise 4-Takt-Verbrennungsmotoren, welche aufgrund der aufeinander folgenden Takte eine kompliziertere Ansteuerung erfordern und größere Spitzenbelastungen erzeugen.

Der schließbare Einlass von der ersten Zündkammer zum Innenraum erlaubt, dass durch die Verbrennung entstehendes Abgas nur zu bestimmten Zeitintervallen aus der Zündkammer in den Innenraum weitergelassen wird. Zudem kann durch den schließbaren Einlass ein Druckabfall erzeugt werden, womit Belastungen der verformbaren Dichtleisten reduziert werden.

Der Auslass aus dem Innenraum kann als schließbarer Auslass gebildet sein, welcher prinzipiell gleich aufgebaut sein kann wie der schließbare Einlass. Die nachstehenden Erläuterungen zum schließbaren Einlass sollen daher auch für einen schließbaren Auslass gelten.

An jedem schließbaren Einlass kann jeweils ein Einlass-Schließkörper vorhanden sein, welcher zum Freigeben und Schließen des Einlasses bewegbar ist. Der Einlass-Schließkörper kann mit den Drehkolben gekoppelt sein, so dass eine Frequenz und Phase (als Rotationswinkel) der Drehkolben vorgeben oder zumindest beeinflussen, zu welchen Zeitpunkten der Einlass-Schließkörper öffnet und schließt. Die Kopplung kann über weitere Komponenten erfolgen, beispielsweise über die Antriebswelle.

Der Einlass-Schließkörper kann auch durch die Dichtleisten gebildet sein. Durch die Rotation der Dichtleisten können diese über den Einlass fahren und diesen vorrübergehend dichtend abdecken. Ebenso können die Dichtleisten als Auslass-Schließkörper dienen und vorrübergehend einen oder mehrere Auslässe aus dem Innenraum dichtend abdecken.

Der schließbare Einlass (und/oder der schließbare Auslass) kann in einer Stirnseite des Innenraums gebildet sein. Eine Kontaktfläche der Dichtleisten zur Stirnseite kann größer sein als eine Kontaktfläche der Dichtleisten zu einer Mantelfläche des Innenraums. Zur Mantelfläche hin ist eine kleine Kontaktfläche wünschenswert, um Reibungsverluste gering zu halten. Hingegen bestimmt die Größe der Kontaktflächen zur Stirnseite, wie lange der Einlass (oder Auslass) abgedeckt wird.

Eine Größe der Kontaktflächen der Dichtleisten zur Stirnseite kann dadurch definiert sein, dass die Dichtleiste zur Stirnseite hin eine Kerbe aufweist. Im Bereich der Kerbe kontaktiert die Dichtleiste nicht die Stirnseite des Innenraums. Somit wird durch die Kerbe der schließbare Einlass freigelassen und eine Schließdauer des Einlasses ist verkürzt. Alternativ oder zusätzlich können die Dichtleisten zur Stirnseite hin eine Verbreiterung aufweisen, durch welche die Kontaktfläche zur Stirnseite vergrößert ist. Durch die Verbreiterung wird eine Schließdauer des Einlasses (oder Auslasses) erhöht.

Alternativ oder zusätzlich kann jeder Einlass-Schließkörper auch jeweils eine drehbar gelagerte Rolle umfassen, welche einen Durchgang aufweist, so dass je nach Drehstellung der Rolle der zugehörige Einlass geöffnet oder geschlossen ist. Die Rolle kann insbesondere als Schlitzrolle oder zylindrische Walze gebildet sein, deren Durchgang ein Schlitz ist. Eine Querschnittsfläche des Schlitzes zum Innenraum hin kann eine andere Größe haben als eine Querschnittsfläche des Schlitzes zur Zündkammer hin. Hierdurch lassen sich insbesondere Strömungscharakteristika des Einleitens von Abgas in den Innenraum einstellen. Verkleinert sich die Querschnittsfläche von der Zündkammer zum Innenraum hin, so erhöht sich damit die Geschwindigkeit des durchströmenden Abgases und eine Einströmung erfolgt in einem relativ kleinem Kegelbereich, wodurch ein effizienter Kraftübertrag auf die Dichtleisten zum Drehen des Drehkolbens möglich sein kann. Es kann aber auch eine sich vergrößernde Querschnittsfläche von der Zündkammer zum Innenraum vorgesehen sein, was hinsichtlich einer gleichmäßigeren Verteilung des Abgases im Innenraum und, damit einhergehend, geringeren Belastungen der Drehkolben und ihrer Dichtleisten vorteilhaft sein kann.

Die Rotationgeschwindigkeit und Rotationsstellung der Schlitzrolle kann getaktet zu einer Zündung des Kraftstoffs in der Zündkammer erfolgen. So kann vorgesehen sein, dass die Schlitzrolle (oder allgemeiner die Trennmittel) immer dann eine Verbindung zum Innenraum mit den Drehkolben freigeben, wenn gerade die Zündung erfolgt, oder wenn ein Druck nach der Zündung maximal wird, oder zu einem vorgegebenen Zeitpunkt vor oder nach einem dieser Vorgänge.

Es kann auch ein Ventil, insbesondere ein Magnetventil, als Einlass-Schließkörper oder Auslass-Schließkörper vorhanden sein. Das Ventil kann insbesondere dazu gestaltet sein, eine im Wesentlichen konstante Dosierung von Abgas zu den Drehkolben zu bewirken.

Die Rotation der Drehkolben erzeugt eine Sogwirkung, durch welche ein Restgas, das nach der Verbrennung des Kraftstoffs in der Zündkammer verbleibt, aus der Zündkammer abgesaugt wird. Dadurch kann sodann für den nächsten Zündungsvorgang eine größere Menge an Kraftstoff-Luftgemisch in die Zündkammer geleitet werden.

Die Dichtleisten können sich in eine Longitudinalrichtung erstrecken, welche im Wesentlichen parallel zu den Rotationsachsen der beiden Drehkolben steht. Insbesondere kann ein Winkel zwischen der Longitudinalrichtung und den Rotationsachsen kleiner als 20°, vorzugsweise kleiner als 10°, sein.

Die Rotationsachsen der Drehkolben einer Motoreinheit können ebenfalls parallel zueinander stehen oder zumindest in einem Winkel, der höchstens 40° oder vorzugsweise höchstens 20° beträgt. Zudem können die Drehkolben einer Motoreinheit identisch gebildet sein. Werden asymmetrische Dichtleisten verwendet, wie später beschrieben, so können die Drehkolben bis auf eine gespiegelte Anordnung oder Formung der Dichtleisten identisch sein.

Unter einem Drehkolben kann ein Gegenstand verstanden werden, welcher drehbar gelagert ist und bei Drehung eine Welle mitdreht. Die Drehung dieser Welle kann sodann verwendet werden, um beispielsweise andere Objekte in Rotation zu versetzten oder über insbesondere einen Generator elektrische Energie zu erzeugen.

Zur Befestigung der Dichtleisten an den Drehkolben können die Dichtleisten in Nuten, also Rillen oder anderen Vertiefungen, aufgenommen sein, welche am jeweiligen Außenumfang der Drehkolben geformt sind. Insbesondere können die Nuten in später näher beschriebenen Zahnkränzen der Drehkolben gebildet sein. In den Nuten können die Dichtleisten in prinzipiell beliebiger Weise befestigt sein. Die Dichtleisten können somit austauschbar sein, womit bei einem Abrieb aufgrund des dichtenden Kontakts ein leichter Wechsel der Dichtleisten möglich ist, ohne dass weitere Komponenten des Verbrennungsmotors ausgetauscht werden müssten.

Bei einer bevorzugten Gestaltung sind die Dichtleisten als Nutensteine gebildet zum haltenden Eingreifen in die Nuten in den Drehkolben. Darunter ist zu verstehen, dass die Dichtleisten an ihrem jeweiligen inneren Ende, welches in den zugehörigen Drehkolben aufgenommen ist, eine Verdickung oder einen Kragen aufweisen. Die Nuten, in welchen die Dichtleisten aufgenommen sind, sind so geformt, dass die genannte Verdickung oder der Kragen haltend eingreift.

Insbesondere können die Nuten als T-Nuten geformt sein und jeder der Nutensteine kann einen seitlich hervorstehenden Kragen zum Eingreifen in eine der T-Nuten umfassen. Grundsätzlich können alternativ oder ergänzend auch Schraubbefestigungen oder Klebeverbindungen zum Befestigen der Dichtleisten in den Nuten vorgesehen werden.

Die Dichtleisten und die zughörigen Nuten können so geformt sein, dass die Dichtleisten in radialer Richtung des zugehörigen Drehkolbens gehalten werden, also unbeweglich sind. Hingegen kann etwa senkrecht hierzu, insbesondere in Richtung der Rotationsachse des Drehkolbens, ein Bewegen (und damit ein Einsetzen und Entnehmen) der Dichtleisten möglich sein. Somit können abgenutzte oder abgeriebene Dichtleisten leicht ausgetauscht werden. Es kann auch vorgesehen sein, dass die Dichtleisten unter Vorspannung in Richtung der Rotationsachse eingesetzt werden, beispielsweise indem eine Feder genutzt wird. Dies hat zur Folge, dass die Dichtleisten unter Vorspannung gegen die Stirnflächen des Innenraums drücken. Befinden sich an diesen Stirnseiten der Einlass und der Auslass, so können die Dichtleisten diese wegen der Vorspannung besonders zuverlässig abdichten.

In Längsrichtung der Dichtleisten (oder in Richtung der Rotationsachsen der Drehkolben) sind die Dichtleisten vorzugsweise so bemessen, dass sie auch in dieser Richtung eine Dichtung zum Boden und zur Decke des Gehäuseinnenraums bewirken.

Die dichtende Wirkung der Dichtleisten in radialer Richtung zu der Gehäuseinnenwand hängt von der Verformung der Dichtleisten ab. Dabei ist es vorteilhaft, wenn der Abgasdruck eine Verformung der Dichtleisten zur Gehäuseinnenwand hin bewirkt, und nicht etwa eine Verformung weg von der Gehäuseinnenwand. Jeder der Dichtleisten hat eine Seite, welche bei einer Drehwinkelstellung des zugehörigen Drehkolbens, bei welcher die Dichtleiste die Gehäuseinnenwand kontaktiert, einströmendem Abgas zugewandt ist. Diese Seite wird nachstehend als Abgaskontaktseite bezeichnet. Um eine Verformung zum dichtenden Kontaktieren der Gehäuseinnenwand herzustellen, hat die Abgaskontaktseite vorzugsweise keine konvexe Form oder zumindest an ihrem der Gehäuseinnenwand zugewandten Ende keine konvexe Form. Bevorzugt kann die Abgaskontaktseite vielmehr eine konkave Form haben oder zumindest an ihrem der Gehäuseinnenwand zugewandten Ende eine konkave Form haben. Alternativ kann ein im Wesentlichen ebener Verlauf der Abgaskontaktseite für eine je nach Umständen ebenfalls ausreichende Verformung sorgen.

Jede der Dichtleisten hat zudem eine Rückseite, welche der Abgaskontaktseite gegenüberliegt. Diese Rückseite ist nicht einströmendem Abgas zugewandt, wenn eine Drehwinkelstellung des zugehörigen Drehkolbens vorliegt, bei welcher die Dichtleiste die Gehäuseinnenwand kontaktiert beziehungsweise zu dieser benachbart ist. Die Form der Rückseite hat ebenfalls Auswirkungen auf die Verformung und damit die dichtende Wirkung. Die Rückseite ist vorzugsweise nicht konkav oder zumindest an einem der Gehäuseinnenwand zugewandten Ende nicht konkav. Bevorzugt ist die Rückseite konvex geformt oder zumindest an einem der Gehäuseinnenwand zugewandten Ende konvex geformt. Eine hinreichende Dichtungswirkung kann wiederum auch bei einer linearen oder ebenen Form der Rückseite möglich sein.

Die Dichtleisten können eine Kante aufweisen, an welcher ein dichtender Kontakt zur Gehäuseinnenwand bewirkt wird. Eine Kante kann sich aus einem nicht runden Querschnitt ergeben, insbesondere wenn die Abgaskontaktseite konkav und die Rückseite konvex ist.

Vorzugsweise verfügt jeder Drehkolben über (genau oder mindestens) drei Dichtleisten, die in gleichen Winkelabständen am Außenumfang des Drehkolbens angeordnet sind. Insbesondere können die Winkelabstände Drehwinkel von 120° um die Rotationsachse des zugehörigen Drehkolbens sein. Zudem kann jeder Drehkolben drei Vertiefungen umfassen, welche sich am Außenumfang an Winkelpositionen befinden, die ebenfalls um 120° zueinander versetzt und vorzugsweise jeweils um 60° zu den Winkelpositionen der drei Dichtleisten versetzt sind. Dadurch wird erreicht, dass einströmendes Abgas stets gegen eine der Dichtleisten an jedem Drehkolben drückt und dadurch eine Rotation des Drehkolbens bewirkt. Zudem wird durch diese Anordnung erreicht, dass unabhängig von einer momentanen Drehstellung der Drehkolben stets eine Dichtung beider Drehkolben zur Gehäuseinnenwand bereitgestellt wird.

Die Gehäuseinnenwand weist an den beiden Bereichen, in welchem der Kontakt zu den Dichtleisten der zwei Drehkolben erfolgt, jeweils eine Kreisabschnittsform auf. Jede dieser zwei Kreisabschnitte kann einen Winkelbereich von vorzugsweise mindestens 90°, vorzugsweise mehr als 180° umfassen. Der Kreismittelpunkt von jedem der Kreisabschnitte stimmt vorzugsweise mit der Rotationsachse von jeweils einem der Drehkolben überein. Ein Radius der Kreisabschnitte ist vorzugsweise gleich oder geringfügig kleiner als ein Radius der Drehkolben (gemessen bis zum äußeren Ende der Dichtleisten), was für den dichtenden Kontakt förderlich ist.

Jeder der Drehkolben kann an seinem Außenumfang einen Zahnkranz aufweisen. Die Drehkolben können sodann so angeordnet sein, dass ihre Zahnkränze ineinandergreifen. Hierdurch wird weitgehend verhindert, dass Abgas zwischen den beiden Drehkolben hindurchströmt. Vielmehr wird das Abgas am Rand zwischen den Drehkolben und der Gehäuseinnenwand befördert. Die Zahnkränze können durch die Vertiefungen und Dichtleisten unterbrochen sein und im Übrigen über den gesamten Umfang der beiden Drehkolben verlaufen. Unter einem Zahnkranz kann verstanden werden, dass eine Außenumfangsfläche des zugehörigen Drehkolbens radial hervorstehende Zähne aufweist. Vorzugsweise erstreckt sich jeder Zahn über die gesamte Höhe der Drehkolben entlang deren Rotationsachsen.

Außer einer dichtenden Wirkung wird durch die ineinandergreifenden Zahnkränze sichergestellt, dass beide Drehkolben mit gleicher Geschwindigkeit rotieren. Dadurch wird erreicht, dass die Dichtleisten von einem der Drehkolben stets auf die Vertiefungen des jeweils anderen Drehkolbens treffen.

Insbesondere durch Temperaturschwankungen kann sich die Relativposition der beiden Drehkolben zueinander geringfügig ändern. Durch das Ineinandergreifen der Zahnkränze kann aber auch bei solchen Positionsschwankungen weiterhin eine dichtende Wirkung erreicht werden. Hingegen wären die Zahnkränze ungeeignet, eine Dichtung zur Gehäuseinnenwand bereitzustellen. Denn hier würden Positionsschwankungen mangels ineinandergreifender Zähne zu Leckströmen führen. Um dies zu vermeiden, wird eine Dichtung zur Gehäuseinnenwand nicht durch die Zahnkränze, sondern durch die Dichtleisten bewirkt.

Je nach Drehstellung der beiden Drehkolben wird ein weitgehend dichtender Kontakt zwischen diesen entweder durch die ineinandergreifenden Zahnkränze bereitgestellt, oder durch eine der Dichtleisten von einem der Drehkolben, welche in eine der Vertiefungen am anderen Drehkolben hineinragt.

Die Dichtleisten können in radialer Richtung von ihrem jeweiligen Drehkolben weiter nach außen ragen als der jeweilige Zahnkranz. Dadurch ist der Zahnkranz stets beabstandet von der Gehäuseinnenwand. Hierzwischen wird ein abgetrennter Bereich gebildet, über welchen Abgas in Richtung der Austrittsöffnung gelangt. Der abgetrennte Bereich wird in Umfangsrichtung der Drehkolben durch die Dichtleisten begrenzt. In radialer Richtung erstreckt sich der abgetrennte Bereich, durch den Abgas geleitet wird, von dem Zahnkranz bis zur Gehäusewand beziehungsweise dem Kreissegmentabschnitt der Gehäusewand.

Für die Größe der abgetrennten Bereiche ist auch die Anzahl an Dichtleisten wichtig. Je mehr Dichtleisten vorgesehen sind, desto kleiner ist jeder der abgetrennten Bereiche. Ein abgetrennter Bereich ist relevant für das Ansaugvolumen sowie das Expansionsvolumen einer Motoreinheit, wobei sich das Expansionsvolumen durch mehrere Motoreinheiten ergeben kann. Ein Größenverhältnis Ansaugvolumens und des Expansionsvolumens relativ zur Zündkammer ist wiederum wichtig für ein Kompressionsverhältnis sowie ein Entspannungsverhältnis und damit für den Wirkungsgrad. Eine Anzahl von drei oder vier Dichtleisten und entsprechenden Vertiefungen pro Drehkolben kann besonders geeignet sein, um einen hohen Wirkungsgrad zu erzielen.

Die Dichtleisten stehen über den jeweiligen Zahnkranz vorzugsweise um eine Radialstrecke hervor, welche zwischen 5% und 30%, insbesondere zwischen 10% und 25%, eines Radius des Zahnkranzes beträgt. Dieser Radius kann ab dem Mittelpunkt des Drehkolbens bis zum Außenumfang des zugehörigen Zahnkranzes gemessen sein. Die hervorstehende Radialstrecke beeinflusst die Größe einer Verformung der Dichtleistung und beeinflusst somit die Dichtungseigenschaften. Zudem ist die hervorstehende Radialstrecke maßgeblich für das Volumen an Abgas, das an dem zugehörigen Drehkolben vorbei befördert wird, und somit entscheidend für Verdichtungsverhältnisse und den Wirkungsgrad des Verbrennungsmotors. Es hat sich gezeigt, dass mit den vorgenannten Werten eine gute Dichtung und ein hoher Wirkungsgrad erreicht werden können.

Eine radiale Größe von Zähnen der Zahnkränze beträgt vorzugsweise höchstens 20%, vorzugsweise höchstens 15%, eines Radius des Zahnkranzes. Hiermit wird ein Abgasfluss zwischen den beiden Zahnkränzen hindurch genügend weit reduziert. Größere Zähne könnten je nach Abgas zudem nachteilige Wirkungen auf die Strömung des Abgases haben. Der Radius des Zahnkranzes kann durch die Strecke von dessen Mittelpunkt bis zu seinem äußeren Umfang, also dem äußeren Ende der Zähne, definiert sein.

Die Zündkammer, die auch als Brennraum bezeichnet werden kann, ist ein schließbarer Raum, in dem Kraftstoff entzündet wird. Je nach Art des Kraftstoffs kann auch eine Lufteinleitung in die Zündkammer vorgesehen sein, etwa wenn Benzin verbrannt wird. Abhängig von der Gestaltung des schließbaren Einlasses und schließbaren Auslasses ist die Zündkammer nicht zwingend zu einem bestimmten Zeitpunkt vollständig geschlossen.

Grundsätzlich kann der Verbrennungsmotor beliebigen Einsatzzwecken dienen, bei denen Energie aus der Verbrennung von Kraftstoff genutzt werden soll. Beispielsweise kann der Verbrennungsmotor Teil eines Fahrzeugs sein oder einer stationären Anlage, etwa eines Kraftwerks.

Eine Motoreinheit ist hier meist mit zwei Drehkolben beschrieben. Grundsätzlich können aber auch weitere Drehkolben im selben Innenraum vorhanden sein. Zudem kann die Anzahl an Dichtleisten und zugehörigen Vertiefungen von der zu den verschiedenen Ausführungsformen beschriebenen Anzahl abweichen.

### Figurenbeschreibung

Weitere Vorteile und Merkmale der Erfindung werden nachstehend mit Bezug auf die beigefügten schematischen Figuren beschrieben. Hierin zeigen:
- Fig. 1: einen Querschnitt eines Ausführungsbeispiels eines erfindungsgemäßen Verbrennungsmotors;
- Fig. 2: einen vergrößerten Ausschnitt aus Fig. 1;
- Fig. 3: einen Querschnitt eines weiteren Ausführungsbeispiels eines erfindungsgemäßen Verbrennungsmotors;
- Fig. 4: eine schematische Darstellung eines weiteren Ausführungsbeispiels eines erfindungsgemäßen Verbrennungsmotors.

Gleiche und gleich wirkende Bestandteile sind in den Figuren in der Regel mit denselben Bezugszeichen gekennzeichnet.

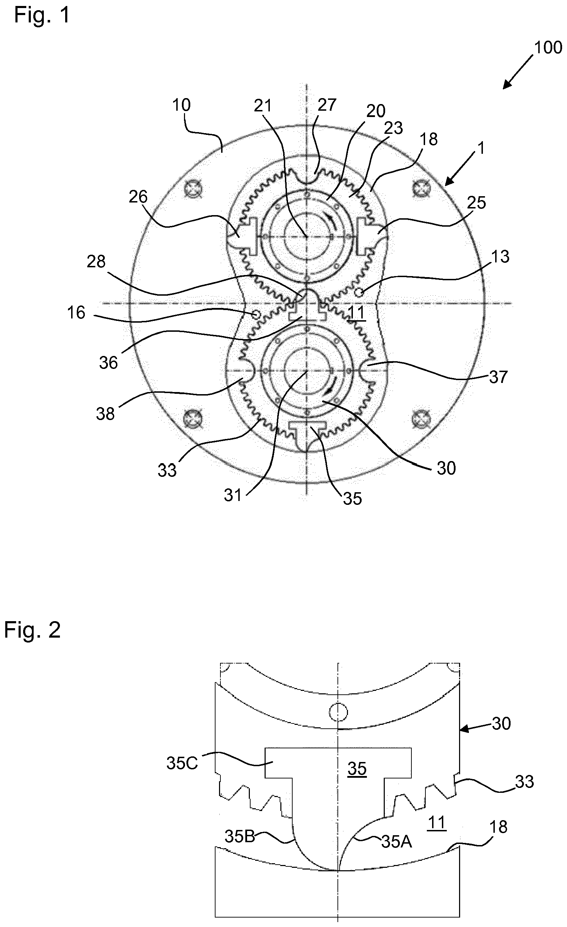

In Fig. 1 ist schematisch ein Querschnitt eines Ausführungsbeispiels eines erfindungsgemäßen Verbrennungsmotors 100 gezeigt. Ein vergrößerter Ausschnitt hiervon ist in Fig. 2 dargestellt.

Dargestellt ist eine Motoreinheit 1 des Verbrennungsmotors 100, wobei dieser mehrere Motoreinheiten umfasst. Die übrigen Motoreinheiten können gleich aufgebaut sein wie die dargestellte.

Die Motoreinheit 1 umfasst eine hier nicht dargestellte Zündkammer, in welche ein Kraftstoff eingeleitet und mittels einer Zündvorrichtung entzündet wird. Von dieser Zündkammer gelangt Abgas, das der Verbrennung des Kraftstoffs entsteht, über einen schließbaren Einlass 13 in einen Innenraum 11 eines Kolbengehäuses 10 der Motoreinheit 1. Dort sind mindestens zwei Drehkolben 20, 30 angeordnet, welche durch den Druck von Abgas in Rotation versetzt werden.

Als Abgas wird vorliegend verbrannter Kraftstoff oder verbranntes Kraftstoff-Gas-Gemisch bezeichnet. Der Begriff des Abgases ist breit zu verstehen und soll die Gase oder Fluide umfassen, die bei einer Entzündung des Kraftstoffs in der Zündkammer entstehen und somit den Druck auf die Drehkolben 20, 30 bewirken.

Der Innenraum 11 des Kolbengehäuses 10 wird durch eine Gehäuseinnenwand 18 beschränkt, welche zwei kreisabschnittsförmige Abschnitte hat, die jeweils einen der beiden Drehkolben 20, 30 umgeben. Für eine Dichtung zu den Drehkolben 20, 30 kann jeder der kreisabschnittsförmigen Abschnitte einen Kreisabschnitt von über 180° abdecken.

Abgas durchströmt den Innenraum 11 vom schließbaren Einlass 13 zu einem schließbaren Auslass 16, wozu es an den Drehkolben 20, 30 entlang strömt und diese in Rotation versetzt.

Für eine effiziente Funktionsweise ist die Gestaltung der Drehkolben 20, 30 wichtig. Diese sollen eine Dichtung zueinander und eine Dichtung zur umgebenden Gehäuseinnenwand 18 bereitstellen, so dass das Abgas bei Stillstand der Drehkolben 20, 30 nicht zum Auslass 16 gelangen kann.

Gleichzeitig sollen die Drehkolben 20, 30 leicht durch das Abgas antreibbar sein, also bereits bei geringem Druck rotieren. Zu diesen Zwecken verfügen die beiden Drehkolben 20 und 30 an ihren jeweiligen Außenseiten über Dichtleisten 25, 26, 35, 36. Die Außenseiten können als Mantelflächen von in etwa zylinderförmigen Drehkolben 20, 30 angesehen werden. Die Dichtleisten 25, 26, 35, 36 erstrecken sich vorzugsweise über die gesamte Höhe des Innenraums 11, wobei die Höhe in Richtung von Rotationsachsen 21, 31 der beiden Drehkolben 20 und 30 verlaufen kann. Die Rotationsachsen 21, 31 erstrecken sich in die Zeichnungsebene hinein.

Der Drehkolben 20 verfügt über mindestens zwei Dichtleisten 25, 26. Ebenso sind am Drehkolben 30 mindestens zwei Dichtleisten 35, 36 angeordnet. Die Dichtleisten 25, 26, 35, 36 ragen radial über den übrigen Außenumfang des zugehörigen Drehkolbens 20, 30 hinaus. Die Dichtleisten 25, 26, 35, 36 sind bevorzugt in Nuten am jeweiligen Drehkolben 20, 30 aufgenommen und können vorzugsweise aus einem anderen Material bestehen als der Teil der Drehkolben 20, 30, in dem die Nuten gebildet sind. Insbesondere können die Dichtleisten 25, 26, 35, 36 aus einem verformbaren Material bestehen. Bei diesem kann es sich beispielsweise um Gummi, Harz oder einen Kunststoff handeln. Dadurch können die Dichtleisten 25, 26, 35, 36 durch gegenströmendes Abgas geringfügig verformt und gegen die Gehäuseinnenwand 18 gedrückt werden. Hiermit wird eine besonders gute Dichtung zur Gehäuseinnenwand 18 erreicht. Prinzipiell können die Dichtleisten 25, 26, 35, 36 aber auch aus einem starren Material bestehen, etwa aus Metall. Alternativ oder ergänzend können die Dichtleisten 25, 26, 35, 36 mit etwas Spielraum in ihren zugehörigen Nuten aufgenommen sein, womit der Abgasdruck die Dichtleisten 25, 26, 35, 36 leicht verkippen kann. Dadurch können prinzipiell die Dichtleisten 25, 26, 35, 36 ebenfalls dichtend gegen die Gehäuseinnenwand 18 gedrückt werden.

Um einen Abgasfluss zwischen den Drehkolben hindurch weitgehend auszuschließen, sind die beiden Drehkolben 20, 30 so im Innenraum 11 angeordnet, dass sie einander berühren. Hierzu umfassen die Drehkolben 20, 30 an ihrem jeweiligen Außenumfang auch je einen Zahnkranz 23, 33, welcher mit dem übrigen Teil des zugehörigen Drehkolbens 20, 30 starr verbunden ist. Die beiden Zahnkränze 23, 33 sind so bemessen und angeordnet, dass sie ineinandergreifen. Dadurch drehen sich beide Zahnkränze 23, 33 zusammen und bilden kaum Hohlräume zwischen einander. Abgas kann daher zwischen den beiden Zahnkränzen 23, 33 kaum durchtreten.

Außerdem umfassen die Drehkolben 20 und 30 an ihrem jeweiligen Außenumfang Vertiefungen 27, 28 und 37, 38. Die Anzahl der Vertiefungen 27, 28 des ersten Drehkolbens 20 ist gleich der Anzahl an Dichtleisten 35, 36 des zweiten Drehkolbens 30 gewählt. Analog ist die Anzahl der Vertiefungen 37, 38 des zweiten Drehkolbens 30 gleich der Anzahl an Dichtleisten 25, 26 des ersten Drehkolbens 20 gewählt. Zudem sind die Vertiefungen 27, 28, 37, 38 und die Dichtleisten 25, 26, 35, 36 an den beiden Drehkolben 20, 30 so angeordnet, dass bei Rotation der beiden Drehkolben 20 und 30 die Dichtleisten 25, 26 des ersten Drehkolbens 20 gerade auf die Vertiefungen 37, 38 des zweiten Drehkolbens 30 treffen. Ebenso treffen die Dichtleisten 35, 36 des zweiten Drehkolbens 30 gerade auf die Vertiefungen 27, 28 des ersten Drehkolbens 20. Eine Größe und Form der Vertiefungen ist so gewählt, dass die Dichtleisten in diesen, insbesondere dichtend, aufgenommen werden können.

Wie auch die Zahnkränze 23, 33 bewirken die Dichtleisten 25, 26 35, 36 zusammen mit den Vertiefungen 27, 28, 37, 38, dass das Abgas kaum zwischen den beiden Drehkolben hindurch treten kann.

Unabhängig von einer momentanen Drehstellung soll zudem stets eine der Dichtleisten 25, 26 35, 36 von jedem Drehkolben 20, 30 eine Dichtung zur Gehäuseinnenwand 18 bereitstellen. Hierfür ist ein Drehwinkel relevant, über den dieselbe Dichtleiste 25, 26 35, 36 eine Dichtung zur Gehäuseinnenwand 18 bewirkt. Dieser Drehwinkel kann, wie in Fig. 1 dargestellt, größer als 180° sein und beispielsweise zwischen 185° und 240° betragen. Hierzu hat die Gehäusewand 18 an jedem der Drehkolben eine Kreisabschnittsform, wobei diese Form einen Kreisabschnitt von größer 180° bildet, also mehr als einen Halbkreis bildet.

Die Aufnahme der Dichtleisten 25, 26 35, 36 in ihren zugehörigen Nuten ist näher in Fig. 2 erkennbar. Beispielhaft für alle Dichtleisten 25, 26 35, 36 ist dort die Dichtleiste 35 in ihrem Querschnitt gezeigt. Die Dichtleiste 35 kann profilartig geformt sein, also über ihre Länge (insbesondere in Richtung der Rotationsachse 31) hinweg die gleiche Querschnittsform aufweisen. Wie dargestellt, bildet die Querschnittsform einen Nutenstein. Bei diesem ist zum inneren Ende der Dichtleiste 35 hin ein Kragen 35C gebildet. Dieser greift in eine T-förmige Vertiefung/Nut ein. Dadurch wird verhindert, dass sich der Nutenstein in radialer Richtung aus der Nut des Drehkolbens unbeabsichtigt lösen kann. Ein Einsetzten und Entfernen des Nutensteins 35 ist in Längsrichtung, also in Richtung der Rotationsachse 31, möglich. Durch die Bildung als Nutensteine sind die Dichtleisten einerseits leicht zu befestigen. Andererseits wird auch ein Austauschen vereinfacht. Dies ist bedeutsam, da es aufgrund des dichtenden Kontakts zur Gehäuseinnenwand 18 zu einem allmählichen Abrieb der Dichtleisten 25, 26, 35, 36 kommen kann und so ein Austausch erforderlich werden kann.

Wie in Fig. 1 gezeigt, drückt das Abgas im Innenraum 11 gegen die Drehkolben 20, 30 und diejenigen Dichtleisten 25, 35, die in der momentanen Drehstellung der Drehkolben 20, 30 der Verbindung zum Zündkammer 40 zugewandt sind. Durch diesen Druck drehen sich die Drehkolben 20, 30 in Richtung der in Fig. 1 eingezeichneten Pfeile.

Für die Drehung und insbesondere die dichtende Wirkung der Dichtleisten 25, 35 ist ihre Form wichtig. Dies wird näher mit Bezug auf Fig. 2 beschrieben. Dort ist eine Dichtleiste 35 gezeigt, welche radial vom Zahnkranz 33 hervorsteht. Die Dichtleiste 35 hat einen Punkt maximaler radialer Ausdehnung, beziehungsweise eine Kante, die sich in die Zeichenebene hinein erstreckt (oder in Richtung der Rotationsachse 31 erstreckt). Von dieser Kante aus hat die Dichtleiste 35 eine Fläche 35A oder Abgaskontaktseite 35A, welche dem einströmenden Abgas zugewandt ist (dies gilt für Drehstellungen, in denen die Dichtleiste 35 die Gehäuseinnenwand 18 kontaktiert). Auf der anderen Seite der genannten Kante hat die Dichtleiste 35 eine weitere Fläche 35B, welche auch als Rückseite 35B bezeichnet wird. Die Rückseite 35B ist nicht dem einströmenden Abgas zugewandt, wenn die Dichtleiste 35 die Gehäuseinnenwand 18 kontaktiert.

Die Abgaskontaktseite 35A weist eine Vertiefung oder eine konkave Form auf, während die Rückseite 35B eine nach außen gewölbte oder konvexe Form hat. Hierdurch wird das äußere Ende der Dichtleiste 35, also der radial am weitesten hervorstehende Teil, durch das gegenströmende Abgas quer oder in etwa senkrecht zur radialen Richtung verformt. Somit wird die Dichtleiste 35 gegen die Gehäuseinnenwand 18 gedrückt. In Fig. 2 wird das untere Ende der Dichtleiste 35 in etwa nach links und somit gegen die Gehäuseinnenwand 18 verformt.

Vorteilhafterweise kann dadurch eine besonders gute Dichtung erzeugt werden, ohne aber eine ungebührend hohe Reibung zwischen den Dichtleisten und der Gehäuseinnenwand zu erzeugen. Bereits bei verhältnismäßig niedrigem Abgasdruck können die Drehkolben daher vorteilhafterweise in Rotation versetzt werden. Somit können auch Abgase mit niedrigem Druck zur Energienutzung herangezogen werden.

Die erzeugte Rotationsenergie kann in prinzipiell beliebiger Weise genutzt werden. Insbesondere kann sie in elektrische Energie umgewandelt werden, etwa mit einem Generator. Ist der Verbrennungsmotor Teil eines Fahrzeugs, kann die elektrische Energie in ein Bordnetz des Kraftfahrzeugs eingespeist und/oder in einer elektrochemischen Batterie oder anderen Speichermitteln gespeichert werden. Alternativ kann die Rotationsenergie auch auf Antriebsräder des Fahrzeugs übertragen werden.

Bei dem in Fig. 1 gezeigten Ausführungsbeispiel befinden sich der Einlass 13 und Auslass 16 an einer Stirnseite des Innenraums 11. Über bewegbare Schließkörper können der Einlass 13 und der Auslass 16 geöffnet und geschlossen werden, um Abgas aus der Zündkammer einzuleiten beziehungsweise Abgas aus dem Innenraum 11 auszulassen. Die Anordnung vom Einlass 13 und Auslass 16 kann so sein, dass sie von den Dichtleisten 25, 26, 35, 36 überstrichen werden. Damit können die Dichtleisten 25, 26, 35, 36 als Schließkörper für den Einlass 13 und/oder den Auslass 16 dienen. Die Dichtleisten 25, 26, 35, 36 stellen also nicht nur die bisher beschriebene Dichtung zu einer Mantelfläche des Innenraums 11 her, sondern auch zum Boden und zur Decke des Innenraums 11, welche als Stirnseiten bezeichnet werden. Alternativ können sich der Einlass 13 und Auslass 16 auch an den Mantelflächen befinden, wobei auch fakultativ durch die Dichtleisten 25, 26, 35, 36 ein Öffnen und Schließen von Einlass 13 und Auslass 16 bewirkt werden kann.

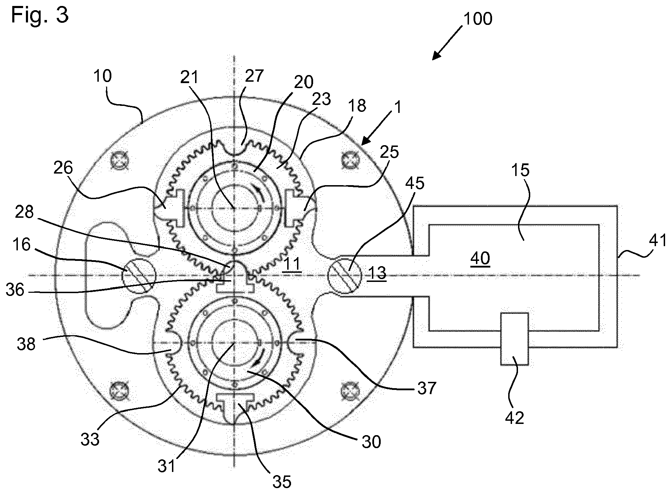

Eine weitere Ausführungsform eines erfindungsgemäßen Verbrennungsmotors ist schematisch in Fig. 3 gezeigt. Diese unterscheidet sich von der Ausführung der Fig. 1 in dem Einlass 13, welcher die Zündkammer 40 mit dem Innenraum 11 verbindet. Bei Fig. 3 ist als bewegbarer Schließkörper am Einlass 13 eine drehbar gelagerte Schlitzrolle 45 vorgesehen. Diese umfasst einen oder mehrere Schlitze, welche je nach Drehstellung einen Durchlass für Abgas zum Innenraum 11 bereitstellen oder einen Durchtritt von Abgas zum Innenraum 11 verhindern. Dadurch kann ein gewünschter Druck an den Drehkolben 20, 30 besser eingestellt werden und Zeitpunkte für das Öffnen und Schließen des Einlasses 13 können präzise und variabel einstellbar sein. Die Schlitzrolle 45 ist vorzugsweise mit den Drehkolben gekoppelt, so dass eine feste, aber fakultative einstellbare, Beziehung zwischen einer Drehposition der Schlitzrolle 45 und des Drehkolbens 20, 30 besteht.

An der Zündkammer 40 ist ein schematisch dargestellter Kraftstoffeinlass 15 vorhanden, über welchen Kraftstoff, je nach Auslegung als Kraftstoff-Gas-Gemisch, in die Zündkammer 40 eingeleitet wird. Der Kraftstoffeinlass 15 kann beispielsweise eine oder mehrere Einspritzdüsen umfassen. Zudem kann der Kraftstoffeinlass 15 separate Öffnungen für ein Einleiten von Gas oder Frischluft (ohne Kraftstoff) umfassen.

Die Zündkammer 40 und der Innenraum 11 sind hier in voneinander getrennten Gehäusen 10 und 41 gebildet. Die beiden Gehäuse 10, 41 können auch voneinander beabstandet sein, solange eine Abgasleitung zwischen ihnen ermöglicht ist. Vorzugsweise sind zwischen den Drehkolben 20, 30 und dem Zündkammer 40 keine Komponenten vorhanden, welche durch die Verbrennung freigesetzte Energie nutzen würden, womit der hier beschriebene Drehkolbenmotor den wesentlichen Anteil der durch die Verbrennung freigesetzten Energie nutzen kann.

Bei dem Beispiel von Fig. 3 wird auch am Auslass 16 des Innenraums 11 eine Schlitzrolle zum Öffnen und Schließen des Auslasses 16 verwendet. Anstelle von Schlitzrollen können auch Rollen mit anderer Öffnungsform verwendet werden. Im dargestellten Beispiel sind die Rotationsachsen der Schlitzrolle(n) parallel zu den Rotationsachsen der Drehkolben 20, 30. Dies ist insbesondere sinnvoll, wenn sich der Einlass 13 und der Auslass 16 an den Mantelflächen des Innenraums 11 befinden. Bei einer Anordnung vom Einlass 13 und Auslass 16 an den Stirnflächen kann die Rotationsachse einer Schlitzrolle auch quer oder senkrecht zu den Rotationsachsen der Drehkolben 20, 30 stehen.

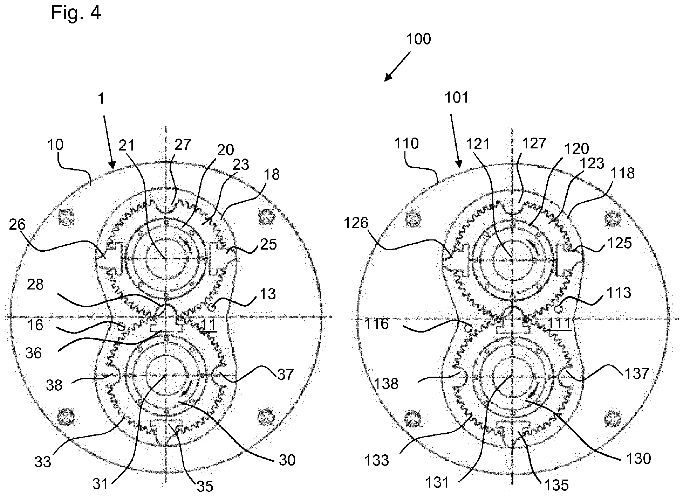

Fig. 4 zeigt schematisch einen Aufbau eines erfindungsgemäßen Verbrennungsmotors, mit mehreren Motoreinheiten, von denen beispielhaft eine erste Motoreinheit 1 auch eine zweite Motoreinheit 101 dargestellt sind. Die erste Motoreinheit 1 ist hier wie zu Fig. 1 beschrieben gestaltet. Die zweite Motoreinheit 101 kann prinzipiell in gleicher Weise aufgebaut sein. In Fig. 4 sind die beiden Motoreinheiten 1, 101 nur zur einfacheren Darstellung nebeneinander abgebildet; bevorzugt sind die Motoreinheiten 1, 101 in Richtung der Rotationsachsen 21, 31 übereinander gestapelt.

Komponenten zur zweiten Motoreinheit 101 sind mit Bezugszeichen gekennzeichnet, die um Einhundert größer sind als Bezugszeichen von gleichen Komponenten der ersten Motoreinheit 1. Die zweite Motoreinheit umfasst demgemäß insbesondere: 120 und 130: Drehkolben; 121 und 131: Drehachsen; 125, 126, 135: Dichtleisten; 127, 137 und 138: Vertiefungen; 118: Gehäuseinnenwand; 123 und 133: Zahnkränze; 110: Drehkolbengehäuse; 111: Innenraum; 113 schließbarer Einlass; 116: schließbarer Auslass.

Die zweite Motoreinheit 101 umfasst ebenfalls eine hier nicht dargestellte Zündkammer. Die Zündkammer der zweiten Motoreinheit 101 kann aufgebaut sein wie zur Zündkammer der ersten Motoreinheit 1 beschrieben. Insbesondere umfasst die Zündkammer der zweiten Motoreinheit einen Kraftstoffeinlass und eingelassener Kraftstoff wird über eine Zündvorrichtung entzündet und verbrannt. Dabei entstehendes Abgas wird über den Einlass 113 in den Innenraum 111 gelassen, um die Drehkolben 120, 130 der zweiten Motoreinheit 101 anzutreiben.

Als ein besonderes Merkmal verfügt die Zündkammer der zweiten Motoreinheit 101, welche nachstehend als zweite Zündkammer bezeichnet wird, auch über einen Abgaseinlass, welcher mit dem Auslass 16 der ersten Motoreinheit 1 verbunden ist. Abgas, das den Innenraum 11 der ersten Motoreinheit 1 durchströmt hat, wird somit (zumindest teilweise) in die Zündkammer der zweiten Motoreinheit 101 geleitet. Dadurch wir ein noch vorhandener Abgasdruck des Abgases der ersten Motoreinheit 1 auch zum Antreiben der Drehkolben 120, 130 der zweiten Motoreinheit 101 genutzt. Der Wirkungsgrad des Verbrennungsmotors wird auch gesteigert, da die Wärmeenergie des Abgases der ersten Motoreinheit 1 für die zweite Motoreinheit 101 genutzt wird.

Eine Verbindung vom Auslass 16 zum Abgaseinlass der zweiten Zündkammer kann rohrartig aufgebaut sein. Ein einfacher und damit wenig fehleranfälliger Aufbau sieht vor, dass ein einziger Schließkörper zum Öffnen und Schließen dieser Verbindung vorgesehen ist. Dazu kann, wie oben beschrieben, der Auslass 16 als schließbarer Auslass gestaltet sein, welcher durch beispielsweise die Dichtleisten oder eine rotierende Schlitzrolle schließbar ist.

Die mehreren übereinander angeordneten Motoreinheiten 1, 101 können mit derselben Antriebswelle gekoppelt sein, so dass die summierte Leistung der Motoreinheiten 1, 101 zusammen nutzbar ist.

Je nach momentan gewünschter Leistung (oder Drehmoment) kann es vorgesehen sein, dass innerhalb eines Zyklus (welcher definiert sein kann als die Dauer zwischen zwei Kraftstoffzündungen derselben Motoreinheit) nur ein bestimmter Anteil der Motoreinheiten eine Kraftstoffeinleitung und -zündung durchführen. Je höher die momentan gewünschte Leistung, desto mehr Motoreinheiten führen eine Kraftstoffeinleitung und -zündung durch.

Mit dem erfindungsgemäßen Verbrennungsmotor können, insbesondere durch die Dichtleistengestaltung und die Kaskadierung mehrerer Drehkolbenmotoreinheiten, bei einem robusten Aufbau ein besonders hoher Wirkungsgrad erzeugt werden.

## Patentansprüche

1. Verbrennungsmotor,
umfassend mehrere in Reihe angeordnete Motoreinheiten (1, 101),
wobei eine erste Motoreinheit (1) der mehreren Motoreinheiten umfasst:
- eine erste Zündkammer (40), umfassend einen Kraftstoffeinlass (15) für zu verbrennenden Kraftstoff und eine Zündvorrichtung (42) zum Entzünden von Kraftstoff in der ersten Zündkammer (40),
- ein erstes Kolbengehäuse (10), welches einen Innenraum (11) bildet, in dem mindestens zwei Drehkolben (20, 30) angeordnet sind,
- einen schließbaren Einlass (13) von der Zündkammer (40) zum Innenraum (11) zum Einleiten von Abgas, welches durch Verbrennung von Kraftstoff in der ersten Zündkammer (40) entsteht, wobei die mindestens zwei Drehkolben (20, 30) vom Abgas angetrieben werden,
- wobei der Innenraum (11) des ersten Kolbengehäuses (10) einen Auslass (16) für Abgas aufweist,
wobei eine zweite Motoreinheit (101) der mehreren Motoreinheiten umfasst:
- eine zweite Zündkammer (140), umfassend einen Kraftstoffeinlass (115) für zu verbrennenden Kraftstoff, einen Abgaseinlass, der mit dem Auslass (16) der ersten Motoreinheit (1) verbunden ist, und eine zweite Zündvorrichtung (140) zum Entzünden von Kraftstoff in der zweiten Zündkammer (140),
- ein zweites Kolbengehäuse (110), welches einen zweiten Innenraum (111) bildet, in dem mindestens zwei weitere Drehkolben (120, 130) angeordnet sind,
- einen zweiten schließbaren Einlass (113) von der zweiten Zündkammer (140) zum zweiten Innenraum (111) zum Einleiten von Abgas, welches durch Verbrennung von Kraftstoff in der zweiten Zündkammer (140) entsteht, wobei die mindestens zwei weiteren Drehkolben (120, 130) vom Abgas angetrieben werden,
- wobei der zweite Innenraum (111) einen zweiten Auslass (116) für Abgas aufweist.

2. Verbrennungsmotor nach Anspruch 1,
**dadurch gekennzeichnet,**
**dass** eine Antriebswelle vorhanden ist und
**dass** die Drehkolben (20, 30, 120, 130) der mehreren Motoreinheiten (1, 101) mit der Antriebswelle gekoppelt sind.

3. Verbrennungsmotor nach Anspruch 2,
**dadurch gekennzeichnet,**
**dass** die Drehkolben (20, 30) der ersten Motoreinheit (1) bezüglich der Antriebswelle rotativ versetzt zu den Drehkolben (120, 130) der zweiten Motoreinheit (101) sind,
**dass** ein rotativer Versatz zwischen den Drehkolben (20, 120) verschiedener Motoreinheiten (1, 101) durch einen Rotationswinkel definiert ist, welcher insbesondere 360° geteilt durch die Anzahl an Motoreinheiten (1, 101) entspricht.

4. Verbrennungsmotor nach einem der Ansprüche 1 bis 3,
**dadurch gekennzeichnet,**
**dass** eine letzte der Motoreinheiten einen Abgasauslass aufweist, über den zumindest ein Teil des Abgases zurückgeführt wird zu einem Abgaseinlass in der ersten Zündkammer (40) der ersten Motoreinheit (1).

5. Verbrennungsmotor nach einem der Ansprüche 1 bis 4,
**dadurch gekennzeichnet,**
**dass** eine elektronische Steuereinrichtung vorhanden und dazu eingerichtet ist, abhängig von einer momentan geforderten Leistung eine Kraftstoffeinleitung in die jeweiligen Zündkammern (40, 140) und eine Aktivierung der zugehörigen Zündvorrichtungen (42, 142) entweder für sämtliche oder nur für einen variabel einstellbaren Teil der Motoreinheiten vorzunehmen, wobei die übrigen Motoreinheiten allein von Abgas der vorhergehenden Motoreinheiten angetrieben werden.

6. Verbrennungsmotor nach einem der Ansprüche 1 bis 5,
**dadurch gekennzeichnet,**
**dass** eine elektronische Steuereinrichtung vorhanden und dazu eingerichtet ist, Zündzeitpunkte der Zündvorrichtungen (42, 142) unterschiedlicher Motoreinheiten (1, 101) nacheinander festzulegen,
wobei insbesondere eine Verzögerung V zwischen den Zündzeitpunkten unterschiedlicher Zündvorrichtungen (42, 142) festgelegt wird als V=D/n, wobei D die Dauer zwischen zwei aufeinanderfolgenden Zündzeitpunkten derselben Zündvorrichtung (42) ist und n die Anzahl an Motoreinheiten (1, 101) ist.

7. Verbrennungsmotor nach einem der Ansprüche 1 bis 6,
**dadurch gekennzeichnet,**
**dass** eine letzte der mehreren Motoreinheiten, insbesondere als einzige der mehreren Motoreinheiten, keine Zündvorrichtung und keinen Einlass für zu verbrennenden Kraftstoff aufweist, so dass Drehkolben dieser letzten Motoreinheit allein durch Abgas von einer oder mehreren vorhergehenden Motoreinheiten (1, 101) angetrieben werden.

8. Verbrennungsmotor nach einem der Ansprüche 1 bis 7,
**dadurch gekennzeichnet,**
**dass** die mehreren Motoreinheiten (1, 101) in Richtung der Rotationsachsen der Drehkolben (20, 30, 120, 130) übereinander angeordnet sind und
**dass** die mehreren Motoreinheiten (1, 101) von einem gemeinsamen Wärmeisolationsgehäuse umgeben sind.

9. Verbrennungsmotor nach einem der Ansprüche 1 bis 8,
**dadurch gekennzeichnet,**
**dass** eine elektronische Steuereinrichtung vorhanden und dazu eingerichtet ist, eine Drehsinnumkehr der Drehkolben der Motoreinheiten auszuführen, wobei Abgas in umgekehrter Richtung durch den jeweiligen Innenraum der Motoreinheiten geleitet wird, insbesondere indem Abgas, das in der zweiten Zündkammer (140) erzeugt wird, über den Abgaseinlass der zweiten Zündkammer (140) zum Auslass (16) der ersten Motoreinheit (1) geleitet wird.

10. Verbrennungsmotor nach einem der Ansprüche 1 bis 9,
**dadurch gekennzeichnet,**
- **dass** jeder Drehkolben (20, 30) an seinem Außenumfang mindestens zwei Dichtleisten (25, 26, 35, 36) und mindestens zwei Vertiefungen (27, 28, 37, 38) aufweist, wobei die Formen der Vertiefungen (27, 28, 37, 38) und der Dichtleisten (25, 26, 35, 36) gewählt sind zum Eingreifen der Dichtleisten (25, 26, 35, 36) von jeweils einem der Drehkolben (20, 30) in die Vertiefungen (27, 28, 37, 38) des jeweils anderen Drehkolbens (20, 30) derselben Motoreinheit (1),
- **dass** die Dichtleisten (25, 26, 35, 36) in Radialrichtung des jeweiligen Drehkolbens (20, 30) zum dichtenden Kontaktieren einer Gehäuseinnenwand (12) bemessen sind.

11. Verbrennungsmotor nach einem der Ansprüche 1 bis 10,
**dadurch gekennzeichnet,**
**dass** an jedem schließbaren Einlass (13) jeweils ein Einlass-Schließkörper vorhanden ist, welcher zum Freigeben und Schließen des Einlasses bewegbar ist und mit den Drehkolben (20, 30) gekoppelt ist,
**dass** der Einlass-Schließkörper durch die Dichtleisten (25, 26, 35, 36) gebildet ist,
**dass** der schließbare Einlass (13) in einer Stirnseite des Innenraums (11) gebildet ist und
**dass** eine Kontaktfläche der Dichtleisten (25, 26, 35, 36) zur Stirnseite größer ist als eine Kontaktfläche der Dichtleisten (25, 26, 35, 36) zu einer Mantelfläche des Innenraums (11).

12. Verbrennungsmotor nach einem der Ansprüche 1 bis 11,
**dadurch gekennzeichnet,**
**dass** jede der Dichtleisten (25, 26, 35, 36) bei einer Drehwinkelstellung des zugehörigen Drehkolbens (20, 30), bei welcher diese Dichtleiste (25, 26, 35, 36) die Gehäuseinnenwand (12) kontaktiert, eine Abgaskontaktseite (35A) aufweist, welche einströmendem Abgas zugewandt ist,
**dass** die Abgaskontaktseite (35A) eine konkave Form hat,
**dass** jede der Dichtleisten (25, 26, 35, 36) eine Rückseite (35B) aufweist, welche der Abgaskontaktseite (35A) gegenüberliegt und bei einer Drehwinkelstellung des zugehörigen Drehkolbens (20, 30), bei welcher diese Dichtleiste (25, 26, 35, 36) die Gehäuseinnenwand (12) kontaktiert, nicht einströmendem Abgas zugewandt ist, und
**dass** die Rückseite (35B) konvex geformt ist.

13. Verbrennungsmotor nach einem der Ansprüche 1 bis 12,
**dadurch gekennzeichnet,**
**dass** jeder der Drehkolben (20, 30) an seinem Außenumfang einen Zahnkranz (23, 33) aufweist,
**dass** die Drehkolben (20, 30) so angeordnet sind, dass ihre Zahnkränze (23, 33) ineinandergreifen, und
**dass** die Dichtleisten (25, 26, 35, 36) in radialer Richtung von ihrem jeweiligen Drehkolben (20, 30) weiter nach außen ragen als der jeweilige Zahnkranz (23, 33).

14. Verbrennungsmotor nach einem der Ansprüche 1 bis 10 oder 12 oder 13,
**dadurch gekennzeichnet,**
**dass** an jedem schließbaren Einlass (13) jeweils ein Einlass-Schließkörper vorhanden ist, welcher zum Freigeben und Schließen des Einlasses (13) bewegbar ist und mit den Drehkolben (20, 30) gekoppelt ist,
**dass** jeder Einlass-Schließkörper jeweils eine drehbar gelagerte Rolle (45) umfasst, welche einen Durchgang aufweist, so dass je nach Drehstellung der Rolle (45) der zugehörige Einlass (13) geöffnet oder geschlossen ist,
**dass** die Rolle (45) als Schlitzrolle gebildet ist, deren Durchgang ein Schlitz ist, wobei eine Querschnittsfläche des Schlitzes zum Innenraum (11) hin eine andere Größe hat als eine Querschnittsfläche des Schlitzes zur Zündkammer (40) hin.

15. Verfahren zum Betreiben eines Verbrennungsmotors, welcher mehrere in Reihe angeordnete Motoreinheiten umfasst, wobei jede Motoreinheit ein Kolbengehäuse (10, 110) umfasst, welches einen Innenraum (11, 111) bildet, in dem jeweils mindestens zwei Drehkolben (20, 30; 120, 130) angeordnet sind,
wobei das Verfahren umfasst:
- Einlassen von zu verbrennendem Kraftstoff in eine erste Zündkammer (40) einer ersten Motoreinheit (1) der mehreren Motoreinheiten;
- Entzünden des Kraftstoffs in der ersten Zündkammer (40) mittels einer Zündvorrichtung (42);
- Einleiten von Abgas, welches durch Verbrennung von Kraftstoff in der ersten Zündkammer (40) entsteht, in den Innenraum (11) der ersten Motoreinheit (1) durch Öffnen einer schließbaren Verbindung (13) zwischen der Zündkammer (40) und dem Innenraum (11);
- Antreiben der mindestens zwei Drehkolben (20, 30) der ersten Motoreinheit (1) durch das Abgas, welches durch den Innenraum (11) strömt,
- Auslassen des Abgases aus dem Innenraum (11) der ersten Motoreinheit (1) zumindest teilweise in eine zweite Zündkammer (140) einer zweiten Motoreinheit (101) der mehreren Motoreinheiten;
- Einlassen von zu verbrennendem Kraftstoff in die zweite Zündkammer (140);
- Entzünden von Kraftstoff in der zweiten Zündkammer (140) mittels einer zweiten Zündvorrichtung (140);
- Einleiten von Abgas, welches durch Verbrennung von Kraftstoff in der zweiten Zündkammer (140) entsteht, in den zweiten Innenraum (111) der zweiten Motoreinheit (100) durch Öffnen einer zweiten schließbaren Verbindung (113) zwischen der zweiten Zündkammer (140) und dem zweiten Innenraum (111);
- Antreiben von mindestens zwei Drehkolben (120, 130) der zweiten Motoreinheit (101) durch das Abgas, welches durch den zweiten Innenraum (111) strömt,
- Auslassen des Abgases aus dem zweiten Innenraum (111).
